# EUROPEAN PATENT SPECIFICATION

(11) **EP 1 801 482 B1**
(45) Date of publication and mention of the grant of the patent: **06.08.2008**
(21) Application number: 06012107.6
(22) Date of filing: 12.06.2006
(51) Int. Cl.: F16L 25/00, F16L 37/133

(54) **Corrugated pipe connection**
Wellrohrverbindung
Connexion pour tuyau ondulé

(30) Priority: 22.12.2005 IT MI20052454
(43) Date of publication of application: 27.06.2007
(73) Proprietor: TEAFLEX S.p.A., 20046 Biassono MI (IT)
(72) Inventor: Formenti, Piero Federico, 20039 Seregno (Milano) (IT)
(74) Representative: Lecce, Giovanni

(56) References cited:
- WO-A-01/79738
- DE-A1- 4 334 529
- DE-A1- 19 540 279
- US-A- 4 836 580

## Description

This invention refers to a connection for corrugated flexible pipes.

More specifically, this invention refers to a connection for corrugated flexible pipes or flexible sheaths mainly meant to receive electric cables for use in the field of industrial equipment, machine tools, rolling stocks and all those applications where accurate protection and containment of the mentioned cables for electric power supplies of all types are required.

It is known that, especially as regards the erection of systems and in the electrical hook-up of machine tools and/or automatic machines, cables lodge in dedicated sheaths, which are made, for example, from PVC or polyamide and are typically equipped with a corrugated surface which is defined by a plurality of close parallel coils, sometimes developing spirally, so as to prove to be conveniently flexible. These sheaths are also paired with special end fittings.

Traditionally, the constraint produced by the union on the parallel coil sheath is created by means of clips or stop rings or, further, by means of snap hooks engaging within the grooving that separates two parallel coils.

These connections however present a serious problem, in connection with the fact that the removal of the sheath from the connection, which is necessary in the event of inspection, repair or maintenance of the cables lodging inside, is far from being easy, with the risk of damaging the sheath or parts of the connection.

A further problem is in that these connection is tend to produce a twisting of the sheath they are paired with, which may damage the cables located inside, for instance during the complicated movements which the members of a machine tool may happen to be exposed to.

A further problem concerns the possibility that the sheaths comes out of the connection following, for instance, recurrent and intense stress affecting the sheath or a strain acting over the dips.

DE 43 34 529 A1 discloses a device for detachably connecting a corrugated flexible conduit. The device comprises a cylindrical joint body with a plurality of equally spaced rectangular holes, and a clasp providing of a corresponding plurality of locking members each formed with a inwardly projecting claw and a stopper or detent. The connecting and disconnecting operations are achieved only through axial movements

WO 01/79738 A discloses a fitting device for a corrugated flexible pipe, comprising a cap nut and a body coupled together in use. The cap nut provides for peripherally-spaced elastic lugs, each with an inward projection adapted to retain the annular grooves of a corrugated flexible pipe upon insertion of the pipe into such cap nut, and a rectangular engagement rib. The body provides for cam-shaped formations protruding from the end surface of the body, each formation being in form of a narrow obliquely extending elongated finger, defining an inner and an outer operating surfaces for engaging said ribs and flex them either inwardly or outwardly in relation to the corrugated pipe.

Although a corrugated flexible pipe can be either released or secured by the relative rotation of the body and the cap nut in one or in the opposite direction, the cam-shaped formations are complex and delicate, and the proper working of the device can be impaired by a less-than-careful operation.

The object of this invention is to remedy the above described problems.

More specifically, the object of this invention is to provide a connection for a corrugated flexible pipe that is such as to allow the sheath to be quickly and simply removed from the connection to be able to take inspection, repair and maintenance actions.

A further object of this invention is to provide a connection as described above that is such as to allow a constant rotating pairing between the union and the pipe or the sheath to occur, to avoid twisting the cables lodging inside.

Not least among the objects of this invention is to provide a connection that avoids any accidental detachment between the pipe or sheath and the union itself.

A further object of this invention is to make available to the users a connection for a corrugated flexible pipe which is such as to guarantee a high level of resistance and reliability over time, and also such as to be easily and cheaply manufactured.

These and other objects are achieved by the connection for corrugated flexible pipes according to claim 1. Further advantageous features are the object of the appended claims.

The structural and functional characteristics of the connection for corrugated flexible pipes of this invention can be better understood from the detailed description that follows, where reference is made to the attached drawings that illustrate a preferential embodiment, which is not meant to be restrictive, and wherein:
figure 1 is a schematic axonometric view of the connection for corrugated flexible pipes of this invention, with its parts assembled;
figure 2 is a schematic exploded view of the same connection;
figure 3 shows, in a schematic perspective view, the same connection paired with a corrugated pipe;
figure 4 is a schematic side and partially cutaway view of the same connection paired with a corrugated pipe;
figure 5 is a schematic drawing of an enlarged detail of figure 4.

With reference to the above-listed figures, the connection for corrugated flexible pipes 25, marked with 10 as reference number, basically includes a body 12 that is mainly cylindrical in shape, and a ring 14 that is suitable to coaxially engage the body 12.

The body 12, advantageously made by molding a plastic material such as, for instance, PVC, polyamide or another known material, is basically cylindrical in shape and defines a sleeve which, at one end, terminates into a threaded extension 16 of limited height and whose diameter is slightly smaller than that of the mentioned body 12. The threaded extension 16 is peripherally delimited by a circular crown with a planar development 18. The threading of this extension 16, which can be male or female in type, is made directly on the extension or is added over it in a known manner.

The reduction of the diameter defines, around the threaded extension 16, a circular crown 18 with a planar development. Below this circular crown, on the body 12, a plurality of flats 20, mainly quadrangular in shape, is made. They are meant to facilitate the grip and the handling of the union 10 at the assembling stage.

In the portion that is opposed to that of extension 16, the body 12 is equipped with three or more circumferential windows 22 that extend into slots 24 extending longitudinally by a smaller length than that of the mentioned windows. Each of the windows 22 has, by one of its external borders 22' and on the opposite side as to the slots 24, a wedge member 23 or a wedge 23 (whose function will be described hereinafter), forming a single unit with the body 12, which develops angularly towards the inside of the body12; and a flat 23' on the border 22" of the windows 22 that is opposed to the external upper border 22' on which the wedge member 23 is formed. In this description, the term "longitudinal" refers to a direction that is parallel to that of the axes of sleeve 12 and ring 14. In other words, each of the windows 22, which are preferably equidistant from one another and quadrangular in shape, extends, circumferentially, into a slot 24 of limited height and whose length is basically the same as that of the window.

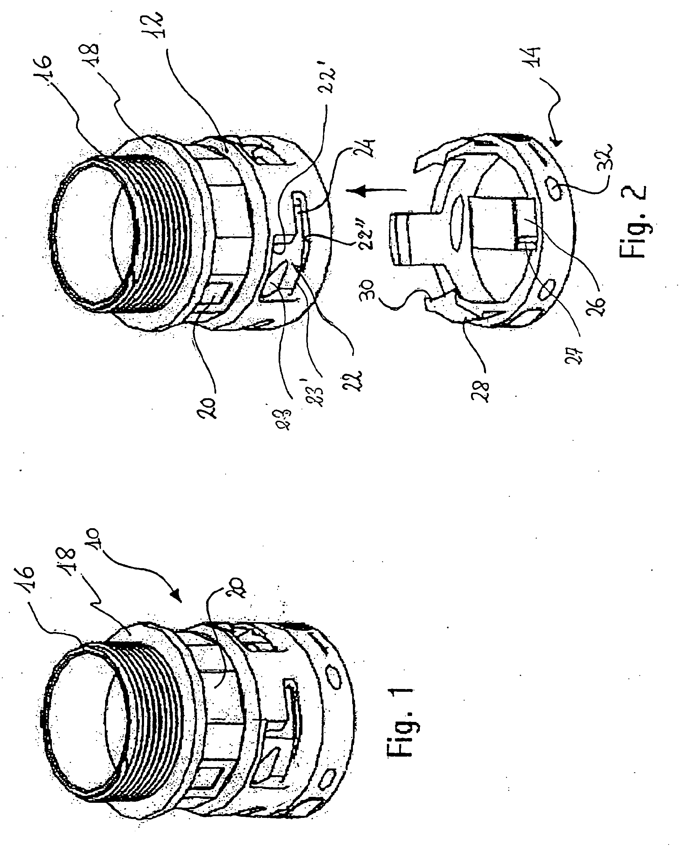

Figure 2 also illustrates the ring 14, of cylindrical shape and whose diameter basically matches that of the body 12.

This ring 14 is typically made by molding in a material that is similar to that making up the body 12 and presents on its front side some locking members 26 that stick out lengthwise, in a number that matches the windows 22 of the body 12, equipped with first and second teeth, namely 28 and 30, arranged on the opposed faces of the locking members 26; and one or more apertures 32, illustratively egg-shaped, arranged along the side surface of the ring 14. The first teeth 28 radially lean towards the outside of ring 14 and are fit to engage the lower edge 22" of the mentioned windows 22, whereas the second teeth 30 develop radially towards the inside of this same ring and are fit to settle in between two adjoining coils of the mentioned pipe 25.

In a preferred embodiment, as it may be noticed from the above-mentioned figures, the windows 22 of the body 12 and the locking members 26 of the ring 14 are 4, arranged at 90°.

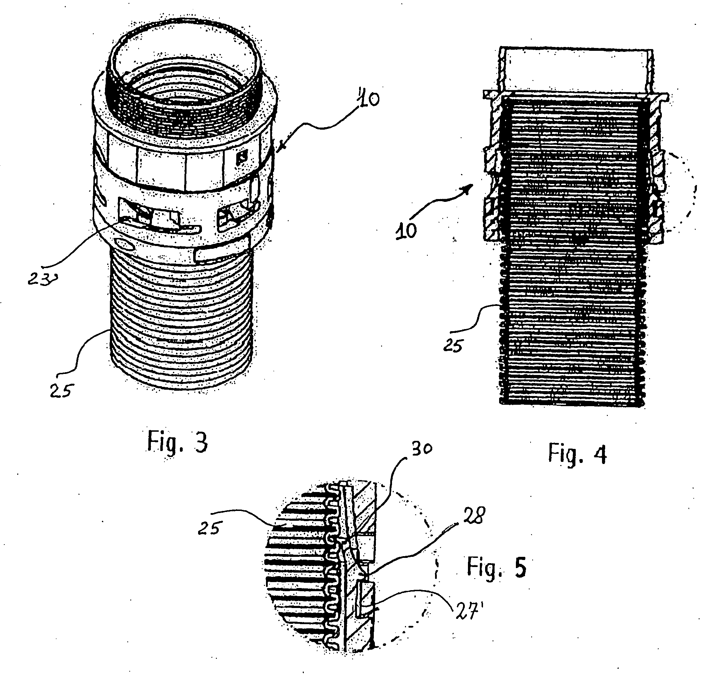

These locking members 26 have teeth, identified by references 28 and 30 in figure 2 and in figure 5, arranged on the opposed faces of locking members 26. These teeth are located at different heights, with tooth 28 radially leaning towards the outer portion of ring 14 and tooth 30 which, on the other hand, develops radially towards the inner portion of the same ring. The surface that connects teeth 28 and 30 of each of the locking members 26 defines a taper that can ease the connection of this ring 14 with the body 12 and of union 10, as a whole, with the corrugated pipe or sheath; this pipe is identified by number reference 25 in figures 3, 4 and 5.

On the side surface of the ring 14 is one or more apertures 32, illustratively egg-shaped, forming the seat for the insertion of a pointed tool, as for instance a screwdriver, according to the methods and objects mentioned hereinafter.

locking members 26 of ring 14 also have, on the outer surface and arranged circumferentially, a projection 27 that develops vertically and is complementary with a notch 27' that is formed on the inner surface of the body 12.

The ring 14 is inserted into the body 12 as shown by the arrow in figure 2 with an axial movement; this movement, owing to the contact of teeth 28 of locking members 26 with the inner wall of the body 12, produces some elastic radial strain of the locking members themselves and the ensuing engagement of teeth 28 with the lower edge 22" of the windows 22 of the body 12, and the engagement of the projection 27 of the ring 14 with the complementary notch 27' of the body 12, thus causing the ring 14 to be locked in the axial direction, as to the body 12.

When the union 10 is applied to the parallel coil pipe 25, or the mentioned pipe is pressed into the mentioned union, the teeth 30 of locking members 26 come into contact, with a slight interference, with a grooving that is between the coils of the pipe itself, thus allowing the length of pipe inserted into the connection to be adjusted by push or pull, but preventing it from coming wholly off the pipe.

Subsequently, by inserting the point of a tool into one of the apertures 32, the ring 14 of union 10 is made turn round its axis, and this takes the teeth 28 of locking members 26 to get into the slots 24 of the windows 22; this will generate some elastic strain in the radial direction of locking members 26 of the ring 14 following which the teeth 30 of these locking members 26 deeply engage one of the grooves located between two parallel coils of the pipe 25, as shown in figure 5, thus creating the desired connection.

To separate the connection 10 from the pipe 25, one needs to put a pointed tool on one of the apertures 32 and force the ring 14 to turn axially, in the opposite direction as to the tightening of the pipe or sheath, whereby disengaging teeth 28 from the slots 24 of the windows 22. Thus, the teeth 30 of the ring 14 flexibly and partially slacken outwardly in the radial direction, so that the deep engagement with the grooving disappears and the pipe 25 is withheld in a limited manner.

Subsequently, by inserting the point of a tool into one of the apertures 32 of the ring 14, a rotation is forced which causes the teeth 30 to engage the locking members 26 with the wedge 23 being integral with the body 12, and the teeth 28 to engage the flat 23'; this brings about some elastic radial strain towards the outside of the locking members 26 that completely disengages the teeth 30 from the grooves that lie between two parallel coils of the tube 25, thus allowing the tube to be quickly and simply removed without running the risk of being broken.

As noticeable from the preceding description, the advantages accomplished by the invention are obvious.

The connection for corrugated pipes is advantageously connectable to pipes or sheaths in a quick and straightforward manner.

A further advantage of this invention is that the sheath can be easily removed, when required, for inspection, maintenance or cable replacement.

A further advantage is that this union allows, on one hand, the corrugated pipe to go round its axis, thus avoiding twisting the cables that lodge within the pipe, whereas on the other hand it conveniently withholds the pipe to the extent of preventing it from hazardously coming off, even in part.

While the invention has been described in detail in the foregoing description by making reference to a preferential embodiment, the same is to be considered as illustrative and not restrictive in character, and several modifications and changes will be obvious to one of ordinary skill in the art in the light of the foregoing description. Therefore, the scope of the invention is to be defined only by the claims appended hereto and by their equivalents.

## Claims

1. A connection for a corrugated flexible pipe (25) comprising:
a body (12) and a ring (14) for co-axially engaging said body (12) in use,
said body (12) being a substantially cylindrical sleeve ending at one end in a threaded extension (16), peripherally delimited by a circular crown (18) with planar development, equipped in the portion opposed to said extension (16), with three or more circumferential windows (22) defined by two facing external edges (22', 22")
said ring (14) being provided with a plurality of locking members (26) axially extending from the periphery of said ring in a number that matches that of the windows (22) of the body (12), each locking member (26) being equipped at its free end with first (28) and second (30) teeth, arranged on opposite sides, said second (30) teeth retaining the annular grooves of said corrugated pipe when this latter is positioned between said body (12) and ring (14),
**characterized in that** each of said circumferential windows (22) is provided in correspondence of one (22") of said external edges extending in a circumferentially extending slot (24) which is longitudinally shorter than the axial length of said window, and that each of said circumferential windows (22) is provided in correspondence of the other (22') edge with a wedge member (23) circumferentially extending for a portion of said window (22) and angularly protruding towards the inner portion of the mentioned body (12); and also has a flat (23') on the one edge (22") of the window (22), opposed to the other edge (22')
and **in that** a plurality of apertures (32) are formed along the side surface of said ring (14) for receiving the point of a tool adapted to rotate the ring 14 around its axis, whereby a rotation in one direction brings said first tooth (28) into said slot 24 of the window (22) thus deeply engaging said second tooth (30) with one groove of said corrugated flexible pipe (25), and the rotation in the opposite direction radially displaces outward said second tooth (30) thus completely disengaging said second tooth (30) from said groove.

2. A connection according to claim 1, **characterized in that** said body (12) and ring (14) are made by molded PVC, polyamide or any other known plastic material.

3. A connection according to claim 1, **characterized in that** said apertures (32) are egg-shaped.

4. A connection according to the previous claims, **characterized in that** said first teeth (28) radially project towards the outer portion of the ring (14) and are such as to engage the lower edge (22") of said windows (22), whereas the second teeth (30) radially develop towards the inner area of the ring and are such as to settle between two adjoining coils of said pipe (25).

5. A connection according to the previous claims, **characterized in that** said first (28) and second teeth (30) are arranged at different heights.

6. A connection according to the previous claims, **characterized in that** said windows (22) of the body (12) are quadrangular in shape.

7. A connection according to the previous claims, **characterized in that** the circumferential extension of said slots (24) of the windows (22) is basically equal to that of the windows (22) themselves.

8. A connection according to the previous claims, **characterized in that** the windows (22) of the body (12) and the locking members (26) of the ring (14) are circumferentially equidistant from one another.

9. A connection according to the previous claims, **characterized in that** the locking members (26) of the ring (14) are quadrangular in shape.

10. A connection according to the previous claims, **characterized in that** each locking member (26) has a projection (27) on its external surface which develops vertically and is complementary with a notch (27') formed on the inner surface of the body (12).

## Patentansprüche

1. Verbinder für ein gewelltes flexibles Rohr (25), umfassend:
einen Körper (12) und einen Ring (14) zum koaxialen Eingriff in den Körper (12) bei der Verwendung,
wobei der Körper (12) eine im Wesentlichen zylindrische Hülse ist, die an einem Ende in einer mit Gewinde versehenen Verlängerung (16) endet, umfänglich durch eine kreisförmige Krone (18) mit planarer Entwicklung begrenzt ist, in dem Abschnitt gegenüber der Verlängerung (16) mit drei oder mehr umfänglichen Fenstern (22) versehen ist, welche durch zwei aufeinander weisende äußere Kanten (22', 22") begrenzt sind,
wobei der Ring (14) mit einer Mehrzahl von Verriegelungselementen (26) versehen ist, welche sich von dem Umfang des Rings in einer Anzahl erstrecken, welche mit der der Fenster (22) des Körpers (12) übereinstimmt, wobei jedes Verriegelungselement (26) an seinem freien Ende mit ersten (28) und zweiten (30) Zähnen versehen ist, die auf gegenüberliegenden Seiten angeordnet sind,
wobei die zweiten (30) Zähne die ringförmigen Nuten des gewellten Rohrs zurückhalten, wenn dieses letztere zwischen dem Körper (12) und dem Ring (14) positioniert ist,
**dadurch gekennzeichnet, dass** jedes der umfänglichen Fenster (22) in Entsprechung zu einer (22") der äußeren Kanten vorgesehen ist, die sich in einem sich in Umfangsrichtung erstreckenden Schlitz (24) erstrecken, welcher in Längsrichtung kürzer als die Axiallänge des Fensters ist, und dass jedes der umfänglichen Fenster (22) in Entsprechung der anderen (22') Kante mit einem Keilelement (23) versehen ist, welches sich für einen Abschnitt des Fensters (22) erstreckt und winklig zu dem inneren Abschnitt des genannten Körpers (12) herausragt und auch eine Fläche (23') auf der anderen Kante (22") des Fensters (22) gegenüber der anderen Kante (22') aufweist
und **dadurch**, dass eine Mehrzahl von Öffnungen (32) entlang der Seitenoberfläche des Rings (14) zur Aufnahme des Punktes eines Werkzeugs ausgebildet ist, welches zum Drehen des Rings (14) um seine Achse geeignet ist, wodurch eine Drehung in einer Richtung den ersten Zahn (28) in den Schlitz (24) des Fensters (22) bringt, wodurch somit der zweite Zahn (30) mit einer Nut des gewellten flexiblen Rohrs (25) in tiefen Eingriff bringt, und die Drehung in der entgegengesetzten Richtung den zweiten Zahn (30) radial nach außen versetzt, wodurch somit der zweite Zahn (30) außer Eingriff mit der Nut gebracht wird.

2. Verbinder gemäß Anspruch 1, **dadurch gekennzeichnet, dass** der Körper (12) und der Ring (14) aus gegossenem PVC, Polyamid oder jeglichem anderen bekannten Kunststoffmaterial hergestellt sind.

3. Verbinder gemäß Anspruch 1, **dadurch gekennzeichnet, dass** die Öffnungen (32) eiförmig sind.

4. Verbinder gemäß den vorhergehenden Ansprüchen, **dadurch gekennzeichnet, dass** der erste Zahn (28) radial zu dem Außenabschnitt des Rings (14) hervorsteht, und dass diese derart vorgesehen sind, dass sie in die untere Kante (22") der Fenster (22) eingreifen, wohingegen die zweiten Zähne (30) sich radial zu dem inneren Bereich des Rings entwickeln und derart vorgesehen sind, dass diese sich zwischen zwei benachbarten Windungen des Rohrs (25) anordnen.

5. Verbinder gemäß den vorhergehenden Ansprüchen, **dadurch gekennzeichnet, dass** die ersten (28) und zweiten Zähne (30) auf unterschiedlichen Höhen angeordnet sind.

6. Verbinder gemäß den vorhergehenden Ansprüchen, **dadurch gekennzeichnet, dass** die Fenster (22) des Körpers (12) in ihrer Form viereckig sind.

7. Verbinder gemäß den vorhergehenden Ansprüchen, **dadurch gekennzeichnet, dass** die umfängliche Erstreckung der Schlitze (24) der Fenster (22) im Wesentlichen gleich der der Fenster (22) selbst ist.

8. Verbinder gemäß den vorhergehenden Ansprüchen, **dadurch gekennzeichnet, dass** die Fenster (22) des Körpers (12) und die Verriegelungselemente (26) des Rings (14) in Umfangsrichtung äquidistant zueinander sind.

9. Verbinder gemäß den vorhergehenden Ansprüchen, **dadurch gekennzeichnet, dass** die Verriegelungselemente (26) des Rings (14) in ihrer Form viereckig sind.

10. Verbinder gemäß den vorhergehenden Ansprüchen, **dadurch gekennzeichnet, dass** jedes Verriegelungselement (26) einen Vorsprung (27) auf seiner äußeren Oberfläche aufweist, welcher sich vertikal entwickelt und zu einer Kerbe (27') komplementär ist, die auf der inneren Oberfläche des Körpers (12) ausgebildet ist.

## Revendications

1. Raccord pour tube flexible (25) à spires parallèles comprenant: un corps (12) et une bague (14) prévue pour venir en prise coaxialement avec ledit corps (12) en cours d'utilisation,
ledit corps (12) étant un fourreau sensiblement cylindrique qui se termine à une première extrémité en une extension filetée (16), délimitée à sa périphérie par une couronne circulaire (18) à développement plan, et qui comporte, dans la partie opposée à ladite extension (16), trois fenêtres circonférentielles (22) ou davantage définies par deux bords externes (22', 22") qui se font face,
ladite bague (14) comportant une pluralité d'éléments de verrouillage (26) qui s'étendent axialement à partir de la périphérie de ladite bague et dont le nombre concorde avec celui des fenêtres (22) du corps (12), chaque élément de verrouillage (26) étant équipé, à son extrémité libre, de premières (28) et deuxièmes (30) dents, disposées sur des côtés opposés, lesdites deuxièmes dents (30) retenant les rainures annulaires dudit tube à spires parallèles lorsque ce dernier est positionné entre ledit corps (12) et ladite bague (14),
**caractérisé en ce que** chacune desdites fenêtres circonférentielles (22) se prolonge, en correspondance avec l'un (22") desdits bords externes, en une fente (24) s'étendant en direction circonférentielle dont la dimension longitudinale est plus courte que la longueur axiale de ladite fenêtre,
et **en ce que** chacune desdites fenêtres circonférentielles (22) comporte, en correspondance avec l'autre bord (22'), un élément de coin (23) qui s'étend en direction circonférentielle sur une partie de ladite fenêtre (22) et fait saillie angulairement vers la partie interne du corps (12) mentionné plus haut et comporte de plus un méplat (23') sur le premier bord (22") de la fenêtre (22), opposé à l'autre bord (22'),
et **en ce qu'**une pluralité d'ouvertures (32) est formée le long de la surface latérale de ladite bague (14) pour recevoir la pointe d'un outil apte à faire tourner la bague (14) autour de son axe, d'une manière telle qu'une rotation dans une première direction amène ladite première dent (28) dans ladite fente (24) de la fenêtre (22) en mettant ainsi ladite deuxième dent (30) profondément en prise avec l'une des rainures dudit tube flexible (25) à spires parallèles, et que la rotation en direction opposée décale ladite deuxième dent (30) vers l'extérieur en dégageant ainsi complètement ladite deuxième dent (30) hors de ladite rainure.

2. Raccord selon la revendication 1, **caractérisé en ce que** ledit corps (12) et ladite bague (14) consistent en PVC, en polyamide ou en une autre matière plastique connue, moulés.

3. Raccord selon la revendication 1, **caractérisé en ce que** lesdites ouvertures (32) sont de forme ovoïde.

4. Raccord selon l'une quelconque des revendications précédentes, **caractérisé en ce que** lesdites premières dents (28) font saillie radialement vers la partie externe de la bague (14) et sont aptes à venir en prise avec le bord inférieur (22") desdites fenêtres (22), tandis que les deuxièmes dents (30) se développent radialement vers la zone interne de la bague et sont aptes à se stabiliser entre deux spires adjacentes dudit tube (25).

5. Raccord selon l'une quelconque des revendications précédentes, **caractérisé en ce que** lesdites premières (28) et deuxièmes (30) dents sont disposées à des hauteurs différentes.

6. Raccord selon l'une quelconque des revendications précédentes, **caractérisé en ce que** lesdites fenêtres (22) du corps (12) sont de forme rectangulaire.

7. Raccord selon l'une quelconque des revendications précédentes, **caractérisé en ce que** l'étendue circonférentielle desdites fentes (24) des fenêtres (22) est fondamentalement égale à celle des fenêtres (22) elles-mêmes.

8. Raccord selon l'une quelconque des revendications précédentes, **caractérisé en ce que** les fenêtres (22) du corps (12) et les éléments de verrouillage (26) de la bague (14) sont équidistants les uns des autres.

9. Raccord selon l'une quelconque des revendications précédentes, **caractérisé en ce que** les éléments de verrouillage (26) de la bague (14) sont de forme rectangulaire.

10. Raccord selon l'une quelconque des revendications précédentes, **caractérisé en ce que** chaque élément de verrouillage (26) comporte sur sa face externe une saillie (27) qui se développe verticalement et est complémentaire d'une encoche (27') formée sur a surface interne du corps (12).
